# EUROPÄISCHE PATENTSCHRIFT

(11) **EP 2 350 577 B1**
(45) Veröffentlichungstag und Bekanntmachung des Hinweises auf die Patenterteilung: **24.04.2019**
(21) Anmeldenummer: 09748315.0
(22) Anmeldetag: 30.10.2009
(51) Int. Cl.: G01F 1/84

(54) **MAGNETEINRICHTUNG SOWIE MESSAUFNEHMER VOM VIBRATIONSTYP MIT EINER SOLCHEN MAGNETEINRICHTUNG**
MAGNET DEVICE AND VIBRATION-TYPE MEASURING SENSOR HAVING SUCH A MAGNET DEVICE
DISPOSITIF À AIMANT ET CAPTEUR DE MESURE DE TYPE À VIBRATIONS LE COMPRENANT

(30) Priorität: 28.11.2008 DE 102008044186
(43) Veröffentlichungstag der Anmeldung: 03.08.2011
(73) Patentinhaber: Endress+Hauser Flowtec AG, 4153 Reinach (CH)
(72) Erfinder: BITTO, Ennio, CH-4147 Aesch (CH); ECKERT, Gerhard, 79618 Rheinfelden (DE); MUNDSCHIN, Dieter, CH-4410 Liestal (CH)
(74) Vertreter: Andres, Angelika Maria
(86) Internationale Anmeldenummer: PCT/EP2009/064386
(87) Internationale Veröffentlichungsnummer: WO 2010/060731

(56) Entgegenhaltungen:
- EP-A1- 0 448 913
- EP-A2- 1 985 975
- WO-A1-88/02475
- WO-A1-2007/043996
- DE-A1-102007 062 397
- US-A- 4 895 031
- US-A- 5 987 998
- US-A1- 2004 016 303

## Beschreibung

Die Erfindung betrifft eine, insb. für einen Schwingungswandler und/oder für einen Meßaufnehmer vom Vibrationstyp geeignete, Magneteinrichtung mit einem ein Magnetfeld liefernden Permanentmagneten, einem mit dem Permanentmagneten fest verbundene Halteeinrichtung sowie mit einem Magnetbecher. Darüberhinaus betrifft die Erfindung einen mit wenigstens einer solche Magneteinrichtung ausgestatteten Meßaufnehmer vom Vibrationstyp für ein in einer Rohrleitung strömendes Medium.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals Meßsysteme verwendet, die mittels eines Meßaufnehmers vom Vibrationstyp und einer daran angeschlossenen, zumeist in einem separaten Elektronik-Gehäuse untergebrachten, Treiber- und Auswerteelektronik, im strömenden Medium Reaktionskräfte, beispielsweise Corioliskräfte, induzieren und von diesen abgeleitet ein die wenigstens eine Meßgröße, beispielsweise einem Massedurchfluß, einer Dichte, einer Viskosität oder einem anderen Prozeßparameter, entsprechend repräsentierendes Meßsignal erzeugen. Derartige - oftmals mittels eines In-Line-Meßgeräts in Kompaktbauweise mit integriertem Meßaufnehmer, wie etwa einem Coriolis-Massedurchflußmesser, gebildete - Meßsysteme sind seit langem bekannt und haben sich im industriellen Einsatz bewährt. Beispiele für solche Meßsysteme mit einem Meßaufnehmer vom Vibrationstyp oder auch einzelne Komponenten davon, sind z.B. in der WO-A 88/02475, der WO-A 88/03642, WO-A 99/40 394 , der WO-A 2008/059015, der WO-A 2008/013545, der WO-A 2007/043996, der WO-A 01/02 816, der WO-A 00/12971, der WO-A 00/14 485, der US-B 73 92 709, der US-B 73 60 451, der US-B 73 40 964, der US-B 72 99 699, der US-B 72 13 469, der US-B 70 80 564, der US-B 70 77 014, der US-B 70 73 396, der US-B 70 40 179, der US-B 70 17 424, der US-B 69 20 798, der US-B 68 83 387, der US-B 68 60 158, der US-B 68 40 109, der US-B 67 58 102, der US-B 66 91 583, der US-B 66 66 098, der US-B 66 51 513, der US-B 65 57 422, der US-B 65 19 828, der US-B 63 97 685, der US-B 63 78 364, der US-B 63 30 832, der US-B 62 23 605, der US-B 61 68 069, der US-A 73 37 676, der US-A 60 92 429, der US-A 60 47 457, der US-A 59 79 246, der US-A 59 45 609, der US-A 57 96 012, der US-A 57 96 011, der US-A 57 96 010, der US-A 57 31 527, der US-A 56 91 485, der US-A 56 10 342, der US-A 56 02 345, der US-A 55 31 126, der US-A 54 76 013, der US-A 53 98 554, der US-A 53 01 557, der US-A 52 91 792, der US-A 52 87 754, der US-A 48 23 614, der US-A 47 77 833, der US-A 47 38 144, der
US-A 2008/0250871, der US-A 2008/0223150, US-A 2008/0223149, der US-A 2008/0141789, der US-A 2008/0047361, der US-A 2007/0186685, der US-A 2007/0151371, der US-A 2007/0151370, der US-A 2007/0119265, der US-A 2007/0119264, der US-A 2006/0201260, der US-B 63 111 36, der JP-A 9-015015, der JP-A 8-136311, der EP-A 317 340 oder der DE-A 10 2007 062397 beschrieben. Jeder der darin gezeigten Meßaufnehmer umfaßt wenigstens ein im wesentlichen gerades oder wenigstens ein gekrümmtes Meßrohr zum Führen des zu messenden, gegebenenfalls auch extrem kalten oder extrem heißen, Mediums. Desweiteren weist jeder der in der US-A 52 91 792, der US-A 59 45 609, der US-B 70 77 014, der US-A 2007/0119264, der WO-A 01 02 816 oder auch der WO-A 99/40 394 gezeigten Meßaufnehmer ein, insb. direkt am Einlaßrohrstück und am Auslaßrohrstück fixiertes, das Meßrohr mit daran gekoppeltem Gegenschwinger sowie die vorgesehene Erreger- und Sensoranordnung umhüllendes zusätzliches Wandlergehäuse auf, während beispielsweise bei dem in der US-A 48 23 614 gezeigten Meßaufnehmer das Wandlergehäuse *quasi* durch den Gegenschwinger selbst gebildet ist oder, anders gesagt, Wandlergehäuse und Gegenschwinger ein und dieselbe Baueinheit sind.

Im Betrieb des Meßsystems wird das wenigstens ein Meßrohr zwecks Generierung von durch das hindurchströmende Medium mit beeinflußten Schwingungsformen im Betrieb vibrieren gelassen. Zum Erregen von Schwingungen des wenigstens einen Meßrohrs weisen Meßaufnehmer vom Vibrationstyp des weiteren eine im Betrieb von einem von der erwähnten Treiberelektronik generierten und entsprechend konditionierten elektrischen Treibersignal, z.B. einem geregelten Strom und/oder einer geregelten Spannung, angesteuerte Erregeranordnung auf. Diese regt das Meßrohr mittels wenigstens eines im Betrieb von einem Erregerstrom durchflossenen elektromechanischen, insb. elektro-dynamischen, Schwingungserregers zu Biegeschwingungen im Nutzmode an. Desweiteren umfassen derartige Meßaufnehmer eine Sensoranordnung mit, insb. elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten elektrischen Sensorsignalen. Neben den für das Erfassen von Vibrationen des Meßrohrs vorgesehenen Schwingungssensoren kann der Meßaufnehmer, wie u.a. auch in der EP-A 831 306, der US-A 57 36 653, der US-A 53 81 697 oder der WO-A 01/02 816 vorgeschlagen, noch weitere, insb. dem Erfassen eher sekundärer Meßgrößen, wie z.B. Temperatur, Beschleunigung, Dehnung, Spannung etc., dienende am jedenfalls mittels Meßrohr, Gegenschwinger sowie die daran jeweils angebrachten Erreger- und Sensoranordnung gebildeten Innenteil oder aber auch in dessen Nähe angeordnete Sensoren aufweisen.

Als angeregte Schwingungsform - dem sogenannten Nutzmode - wird bei Meßaufnehmern mit gekrümmtem, z.B. U-, V- oder Ω-artig geformtem, Meßrohr üblicherweise jene Eigenschwingungsform gewählt, bei denen das Meßrohr zumindest anteilig bei einer niedrigsten natürlichen Resonanzfrequenz um eine gedachte Längsachse des Meßaufnehmers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßaufnehmern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßaufnehmern mit geradem Meßrohr hingegen wird zwecks Erzeugung von massendurchflußabhängigen Corioliskräften oftmals ein solcher Nutzmode gewählt, bei dem das Meßrohr zumindest anteilig Biegeschwingungen im wesentlichen in einer einzigen gedachten Schwingungsebene ausführt, so daß die Schwingungen im Coriolismode dementsprechend als zu den Nutzmodeschwingungen koplanere Biegeschwingungen gleicher Schwingfrequenz ausgebildet sind. Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzte, Meßaufnehmer im Betrieb auf einer momentanen natürlichen Resonanzfrequenz der für den Nutzmode gewählten Schwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßaufnehmern vom Vibrationstyp, Viskosität des hindurchströmenden Mediums direkt zu messen, beispielsweise basierend auf einer für die Erregung der Schwingungen erforderlichen Erregerleistung. Bei Meßaufnehmern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitigen Verteilerstück in die Prozeßleitung eingebunden.

Bei Meßaufnehmern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßaufnehmer mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßaufnehmers ist zumeist allein mittels der zwei Verbindungsrohrstücke, über die das Meßrohr im Betrieb mit der Prozeßleitung kommuniziert, in einem schutzgebenden Meßaufnehmer-Gehäuse gehaltert, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01/02816 oder auch der WO-A 99/40394 gezeigten Meßaufnehmer mit einem einzigen, im wesentlichen geraden Meßrohr sind letzteres und der Gegenschwinger, wie bei herkömmlichen Meßaufnehmern durchaus üblich, zueinander im wesentlichen koaxial ausgerichtet. Bei marktgängigen Meßaufnehmern der vorgenannten Art ist zumeist auch der Gegenschwinger im wesentlichen rohrförmig und als im wesentlichen gerader Hohlzylinder ausgebildet, der im Meßaufnehmer so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Die Erregeranordnung von Meßaufnehmern der in Rede stehenden Art weist üblicherweise wenigstens eine auf das wenigstens eine Meßrohr und den ggf. vorhandenen Gegenschwinger oder das ggf. vorhandene andere Meßrohr zumeist differentiell einwirkenden, Schwingungserreger dienende, zumeist elektrodynamische, Magneteinrichtung auf, während die Sensoranordnung einen als einlaßseitiger Schwingungssensor dienende einlaßseitige, zumeist ebenfalls elektrodynamische, Magneteinrichtung sowie wenigstens einen dazu im wesentlichen baugleichen, als auslaßseitiger Schwingungssensor dienenden auslaßseitige Magneteinrichtung umfaßt. Üblicherweise sind zumindest die als Schwingungssensor dienenden Magneteinrichtung im wesentlichen baugleich. Solche als Schwingungswandler dienende Magneteinrichtungen marktgängiger Meßaufnehmer vom Vibrationstyp sind mittels einer - bei Meßaufnehmern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Permanentmagneten gebildet, der entsprechend am zu bewegenden Meßrohr fixiert ist. Dies hat beispielsweise den Vorteil, daß mittels der Magneteinrichtungen die Schwingungsbewegungen zwischen dem vibrierenden Meßrohr und dessen Gegenpart, also dem ggf. vorhandenen Gegenschwinger oder dem ggf. vorhandenen anderen Meßrohr, differentiell erfaßt bzw. erzeugt werden können. Der Permanentmagnet und die als Erreger- bzw. Sensorspule dienende Magnetspule sind dabei üblicherweise so ausgerichtet, daß sie zueinander im wesentlichen koaxial verlaufen. Zudem ist bei herkömmlichen Meßaufnehmern die als Schwingungserreger dienende Magneteinrichtung üblicherweise derart ausgebildet und im Meßaufnehmer plaziert, daß sie im wesentlichen zentral an das wenigstens eine Meßrohr angreift. Dabei ist die als Schwingungserreger dienende Magneteinrichtungen, wie beispielsweise auch bei den in der US-A 57 96 010, der US-B 68 40 109, der US-B 70 77 014 oder der US-B 70 17 424 vorgeschlagenen Meßaufnehmern gezeigt, zumeist zumindest punktuell entlang einer gedachten mittigen Umfangslinie des Meßrohrs außen an diesem fixiert. Alternativ zu mittels eher zentral und direkt auf das Meßrohr wirkenden Magneteinrichtung gebildeten Schwingungserregern können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Magneteinrichtung gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßaufnehmer-Gehäuse wirkenden Magneteinrichtung gebildete Erregeranordnungen verwendet werden.

Bei Meßaufnehmern der in Rede stehenden Art ist es, wie u.a. auch in der US-A 60 47 457 oder der US-B 69 20 798 erwähnt, zudem üblich Magnetspule und den damit korrespondierenden Permanentmagneten der als Schwingungswandler - sei es nun ein Schwingungserreger oder ein Schwingungssensor - dienenden Magneteinrichtung an auf das Meßrohr aufgebrachte ring- oder ringscheibenförmige, insb. metallische, Befestigungselemente zu haltern, die das Meßrohr jeweils im wesentlichen entlang einer von dessen gedachten Umfangslinien fest umspannen. Das jeweilige Befestigungselement kann, wie u.a. in der US-A 60 47 457, US-B 72 99 699, der US-A 2006/0201260, der US-A 56 10 342 bzw. der US-B 65 19 828 vorgeschlagen, durch Verpressen von außen, durch hydraulisches Pressen oder Walzen von innerhalb des Meßrohrs oder durch thermisches Aufschrumpfen am Meßrohr fixiert werden, insbesondere in der Weise, daß es dauerhaft elastischen oder gemischt plastisch-elastischen Verformungen unterworfen und infolgedessen bezüglich des Meßrohrs permanent radial vorgespannt ist.

Bei marktgängigen Meßaufnehmern vom Vibrationstyp sind die als Schwingungssensoren dienenden Magneteinrichtungen, wie bereits angedeutet, oftmals zumindest insoweit im wesentlichen baugleich ausgebildet, wie die wenigstens eine als Schwingungserreger dienende Magneteinrichtung, als sie nach dem gleichen Wirkprinzip arbeiten. Dementsprechend sind auch die Magneteinrichtungen einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Magnetspule zusammenwirkenden stabförmigen Permanentmagneten gebildet, der das Magnetfeld liefert. Jede der vorgenannten Spulen ist zudem mittels wenigstens eines Paars elektrischer Anschlußleitungen mit der erwähnten Betriebs- und Auswerteelektronik des In-Line-Meßgeräts verbunden, die zumeist auf möglichst kurzem Wege von den Spulen über den Gegenschwinger hin zum Wandlergehäuse geführt sind.

Bei Magneteinrichtungen der vorgenannten Art ist der Permanentmagnet, etwa zwecks Homogenisierung des Spule und Permanentmagneten durchflutenden Magnetfelds sowie zwecks Vermeidung von störenden Streufeldern, üblicherweise innerhalb eines zumindest anteilig aus magnetisch leitfähigem Material bestehenden Magnetbecher plaziert und daselbst an einem Becherboden gehaltert, von dem ausgehend sich eine im wesentlichen rohrförmige, insb. kreiszylindrisch, ausgebildete Becherwand des Magnetbechers erstreckt. Üblicherweise ist der Permanentmagnet im wesentlichen in einem Zentrum des Becherbodens angeordnete und zumeist so an diesem fixiert, daß Permanentmagnet und Becherwand zueinander im wesentlichen koaxial verlaufend ausgerichtet sind.

Zum Befestigen von Permanentmagnet und Magnetbecher kann bei Magneteinrichtungen der in Rede stehenden Art, wie etwa in der WO-A 88/02475 gezeigt, eine Spannschraube dienen, die durch eine im Permanentmagneten vorgesehene Bohrung und eine mit dieser korrespondierende Bohrung im Becherboden hindurchgeführt und mit einer entsprechenden Spannmutter festgezogen ist. Allerdings kann eine solche Spannschraube, insb. deren letztlich das frei Ende des Permanentmagneten bildende jeweiliger Schraubenkopf, das in der Magneteinrichtung geführte Magnetfeld in unerwünschter Weise deformieren und insoweit stören.

Zur Vermeidung solcher Störungen des Magnetfeldes werden in Magneteinrichtungen marktgängiger Meßaufnehmer vom Vibrationstyp Permanentmagnet und Becherboden, wie auch in der WO-A 2007/043996 oder WO-A 00/12971 gezeigt, oftmals stoffschlüssig miteinander verbunden, etwa durch Hartlöten oder Schweißen, ggf. auch unter Verwendung eines auf den Permanentmagneten aufgepreßten und zwischen diesem und dem Lot vermittelnden Hülse. Darüberhinaus ist es durchaus üblich, den Permanentmagnet auf den Becherboden aufzukleben. Allerdings können, wie u.a. auch in der WO-A 00/12971 oder der US-B 68 83 387 erwähnt, Magneteinrichtungen der in Rede stehenden Art erheblichen Belastungen ausgesetzt sein, etwa infolge sehr hoher (> 200°C) bzw. sehr niedriger (< -50°C) Betriebstemperatur und/oder infolge hohen Beschleunigungskräften (> 10G), so daß besonders die zwischen Permanentmagnet und Becherboden hergestellten stoffschlüssigen Klebe- bzw. Lotverbindungen sehr hohen Qualitätsanforderungen, insb. hinsichtlich der Dauerfestigkeit unter Betriebsbedingungen, genügen müssen.

Ein Nachteil solcher stoffschlüssigen Verbindungen zwischen Permanentmagnet und Becherboden ist allerdings darin zusehen, daß, insb. auch wegen der Einbaulage des Permanentmagneten innerhalb des Magnetbechers wie auch den sehr geringen Abmessungen von Permanentmagneten und Magnetbecher, das Applizieren der den Stoffschluß letztlich herstellenden Materialien, etwa des Lotes bzw. des Klebers, einerseits und anderseits das hoch präzise Ausrichten des Permanentmagneten innerhalb des Magnetbechers mit erheblichen Schwierigkeiten verbunden und insoweit sehr aufwendig sein können. Zudem sind durch die zumeist sehr unterschiedlichen Materialien für Permanentmagnet bzw. Becherboden, insb. hinsichtlich Verarbeitbarkeit und erforderlicher Dauerfestigkeit über einen weiten thermischen und/der mechanischen Belastungsbereich, tatsächlich gut geeignete Lote bzw. Kleber nicht ohne weiteres verfügbar oder aber sehr teuer.

Eine Aufgabe der Erfindung besteht daher darin, für Meßaufnehmer vom Vibrationstyp geeignete Magneteinrichtungen der vorgenannten Art dahingehend zu verbessern, daß zum einen deren Montage vereinfacht und zum anderen auch die Dauerfestigkeit solcher Magneteinrichtungen bzw. deren Betriebstemperaturbereich weiter ausgedehnt werden kann.

Zur Lösung der Aufgabe besteht die Erfindung in einer Magneteinrichtung, insb. für einen Schwingungswandler und/oder für einen Meßaufnehmer vom Vibrationstyp, die
- einen ein Magnetfeld liefernden, insb. stabförmigen, Permanentmagneten,
- einen mit dem Permanentmagneten, insb. durch Kraft- und/oder Form- und/oder Stoffschluß, fest verbundene, insb. als Spannzange ausgebildete, Halteeinrichtung mit
   -- einem dem Permanentmagneten zugewandten, insb. zumindest anteilig als Außenkonus ausgebildeten, Haltekopf zum Haltern des Permanentmagneten, und
   -- einem am Haltekopf fixierten, insb. ein Außengewinde aufweisenden und/oder in einem sich an das Haltekopf anschließenden Abschnitt längsgeschlitzten, Haltebolzen, sowie
- einen Magnetbecher mit
   - einem Becherboden und
   - einer sich vom Becherboden aus erstreckenden, insb. im wesentlichen kreiszylindrisch und/oder rohrförmig ausgebildeten, Becherwand umfaßt,
- wobei der Haltekopf der Halteeinrichtung zumindest teilweise von einer im Becherboden vorgesehenen, insb. zumindest anteilig als Innenkonus ausgebildeten, Durchführung aufgenommen ist, und
- wobei eine äußere Kontaktfläche des Haltekopfs und eine innere Kontaktfläche der Durchführung einander unter Bildung eines Kraftschlusses zwischen Magnetbecher und Halteeinrichtung berühren, insb. in einer die Durchführung aufweitenden und/oder den Becherboden elastisch verformenden Weise.

Darüber hinaus besteht die Erfindung in einem Meßaufnehmer vom Vibrationstyp für ein in einer Rohrleitung strömendes Medium, welcher Meßaufnehmer wenigstens ein zumindest zeitweise vibrierendes Meßrohr zum Führen von zu messendem Medium, sowie wenigstens einen, insb. als elektrodynamischer Schwingungserreger oder als elektrodynamischer Schwingungssensor dienenden, am wenigstens einen Meßrohr gehalterten Schwingungswandler für Vibrationen des wenigstens einen Meßrohrs umfaßt, wobei der wenigstens eine Schwingungswandler mittels vorgenannter Magneteinrichtung gebildet ist.

Nach einer ersten Ausgestaltung der Magneteinrichtung der Erfindung ist vorgesehen, daß der Haltebolzen der Halteeinrichtung ein Außengewinde aufweist, und daß der Haltekopf der Halteeinrichtung mittels einer auf den Haltebolzen aufgeschraubten Spannmutter gegen den Becherboden gedrückt gehalten ist. Diese Ausgestaltung der Erfindung weiterbildend ist ferner vorgesehen, daß zwischen Spannmutter und Becherboden ein, insb. als Federring oder als Federscheibe ausgebildetes, Federelement plaziert ist.

Nach einer zweiten Ausgestaltung der Magneteinrichtung der Erfindung ist vorgesehen, daß der Haltekopf mittels wenigstens zweier oder mehrerer, jeweils als Spannbacke ausgebildeten Kopfteilen gebildet ist. Diese Ausgestaltung der Erfindung weiterbildend ist ferner vorgesehen, daß der Permanentmagnet mit einem von dessen Enden zwischen den wenigstens zwei Kopfteilen plaziert ist, und daß die wenigstens zwei Kopfteile unter Bildung eines, insb. im Zusammenspiel von Spannmutter und Durchführung sowie den wenigstens zwei Kopfteilen erzwungenen, Kraftschlusses zwischen Permanentmagnet und Haltekopf jeweils gegen den Permanentmagnet gedrückt gehalten sind.

Nach einer dritten Ausgestaltung der Magneteinrichtung der Erfindung ist vorgesehen, daß der Kraftschluß zwischen Magnetbecher und Halteeinrichtung durch thermisches Aufschrumpfen des Magnetbechers auf die Halteeinrichtung, insb. den Haltekopf, hergestellt ist.

Nach einer vierten Ausgestaltung der Magneteinrichtung der Erfindung ist vorgesehen, daß Permanentmagnet und Haltekopf mittels, insb. durch wiederlösbaren, Kraftschluß und/oder mittels Formschluß und/der mittels, insb. durch Lotverbindung oder Klebverbindung hergestellten, Stoffschluß, aneinander fixiert sind.

Nach einer fünften Ausgestaltung der Magneteinrichtung der Erfindung ist vorgesehen, daß die Becherwand des Magnetbechers wenigstens einen, insb. sich bis zu einem zum Becherboden distalen Rand der Becherwand erstreckenden, Schlitz aufweist.

Nach einer sechsten Ausgestaltung der Magneteinrichtung der Erfindung ist vorgesehen, daß der Permanentmagnet zumindest anteilig, insb. überwiegend oder vollständig, aus einer Seltenenerde, insb. NdFeB, SmCo oder dergleichen, besteht; und/oder
- wobei der Permanentmagnet zumindest anteilig, insb. überwiegend oder vollständig, aus Ferrit oder AlNiCo besteht.

Nach einer siebenten Ausgestaltung der Magneteinrichtung der Erfindung ist vorgesehen, daß der Magnetbecher zumindest anteilig, insb. überwiegend oder vollständig, aus einem Stahl, insb. einem Automatenstahl oder einem Baustahl, besteht; und/oder daß der Magnetbecher zumindest anteilig, insb. überwiegend oder vollständig, aus Ferrit besteht.

Nach einer ersten Ausgestaltung des Meßaufnehmers der Erfindung ist vorgesehen, daß die Magneteinrichtung via Haltebolzen mit dem wenigstens einen Meßrohr mechanisch gekoppelt ist.

Nach einer zweiten Ausgestaltung des Meßaufnehmers der Erfindung weist der wenigstens eine Schwingungswandler weiters eine dem Magnetfeld des Permanentmagneten ausgesetzte Zylinderspule aufweist.

Ein Vorteil der Erfindung besteht u.a. darin, daß die Magneteinrichtung einen Einsatz eines damit ausgestatteten Meßaufnehmers vom Vibrationstyp in einem In-Line-Meßgerät zum Messen und/oder Überwachen wenigstens eines Parameters, insb. eines Massendurchflusse, m, einer Dichte, *ρ*, und/oder einer Viskosität, *η*, eines in einer Rohrleitung strömenden Mediums, insb. einem Coriolis-Massendurchflußmeßgerät, einem Dichtemeßgerät, einem Viskositätsmeßgerät oder dergleichen auch bei extremen Betriebstemperaturen von zumindest zeitweise mehr als 200°C und/oder von zumindest zeitweise weniger als -50°C ermöglicht. Zudem können der Aufbau bzw. die Montage von Magneteinrichtungen der in Rede stehenden Art erheblich vereinfacht und damit die Herstellungskosten von Meßaufnehmern vom Vibrationstyp insgesamt verringert werden.

Nachfolgend werden die Erfindung und vorteilhafte Ausgestaltungen derselben anhand eines Ausführungsbeispiels erläutert, das in den Figuren der Zeichnung dargestellt ist; gleiche Teile sind in den Figuren im übrigen mit gleichen Bezugszeichen versehen. Falls es der Übersichtlichkeit dienlich ist, wird auf bereits erwähnte Bezugszeichen in nachfolgenden Figuren verzichtet. Im einzelne sind in:
Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1a: zeigt schematisch ein In-Line-Meßgerät für in Rohrleitungen strömende Medien in einer perspektivischen Seitenansicht;
- Fig. 1b: zeigt schematisch in einer geschnitten Seitenansicht einen für ein In-Line-Meßgerät gemäß der Fig. 1a geeigneten Meßaufnehmer vom Vibrations-Typ;
- Fig. 2a, b: zeigen schematisch eine Magneteinrichtung für einen Meßaufnehmer gemäß den Fig. 1b in einer geschnittenen Seitenansicht (2a) bzw. in einer Aufsicht (2b);
- Fig. 3a, b: zeigen schematisch in teilweise geschnittener Seitenansicht (3a) bzw. in einer Aufsicht (3b) eine weitere Variante einer für einen Meßaufnehmer gemäß den Fig. 1b geeigneten Magneteinrichtung;
- Fig. 4: zeigt schematisch in einer Aufsicht noch eine weitere Variante einer für einen Meßaufnehmer gemäß den Fig. 1b geeigneten Magneteinrichtung; und
- Fig. 5: zeigt schematisch eine erfindungsgemäße Magneteinrichtung in Explosionsdarstellung.

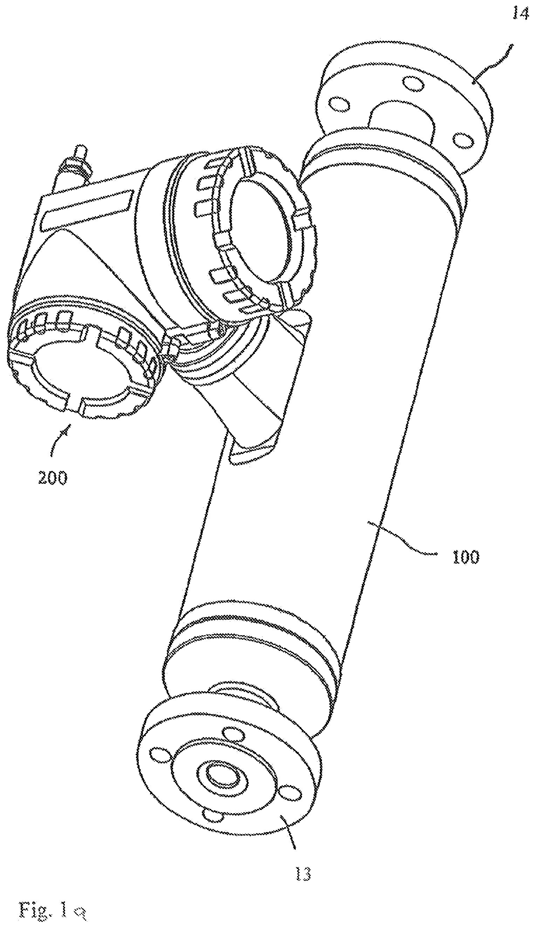

In der Fig. 1a ist ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät, Druckmeßgerät oder dergleichen, Meßsystem dargestellt, das dem Messen und/oder Überwachen wenigstens einer physikalischen Meßgröße, beispielsweise einem Massendurchfluß, einer Dichte, einer Viskosität etc., von einem in der Prozeßleitung strömenden, beispielsweise auch mehr als 200°C heißem oder weniger als -50°C kaltem, Medium dient. Das - hier als In-Line-Meßgerät in Kompaktbauweise ausgebildete - Meßsystem umfaßt dafür einen über ein Einlaßende sowie ein Auslaßende an die Prozeßleitung angeschlossenen Meßaufnehmer vom Vibrationstyp der im Betrieb entsprechend vom zu messenden Medium durchströmt und an eine dem Ansteuern des Meßaufnehmers dienende Treiber-Elektronik des Meßsystems sowie eine Primärsignale des Meßaufnehmers verarbeitende, gegebenenfalls im Betrieb auch mit der Treiber-Elektronik kommunizierende, Auswerte-Elektronik des Meßsystems elektrisch angeschlossen ist, die im Betrieb die wenigstens eine Meßgröße repräsentierende Meßwerte liefert. Die Treiber-Elektronik und die Auswerte-Elektronik sowie weitere, dem Betrieb des Meßsystems dienende Elektronikkomponenten, wie etwa interne Energieversorgungsschaltungen und/oder dem Anschluß an ein übergeordnetes Meßdatenverarbeitungssystem und/oder einem Feldbus dienenden Kommunikationsschaltungen, sind ferner in einem entsprechenden, insb. schlag- und/oder auch explosionsfest ausgebildeten, Elektronikgehäuse 200 untergebracht.

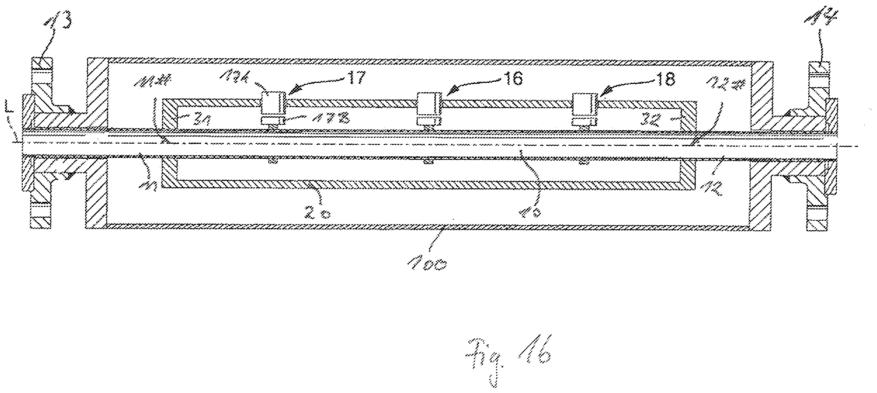

In Fig. 1b ist stark vereinfacht ein Ausführungsbeispiel für einen solchen Meßaufnehmer vom Vibrationstyp schematisch dargestellt. Der Meßaufnehmer dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßaufnehmer zurückwirken. Abgeleitet von diesen Reaktionskräften können so in der dem Fachmann bekannten Weise z.B. ein Massedurchfluß *m*, eine Dichte *ρ* und/oder eine Viskosität *η* des Mediums gemessen werden. Der Meßaufnehmer umfaßt dafür ein Wandler-Gehäuse 100 sowie ein im Wandler-Gehäuse 100 angeordnetes, die physikalisch-elektrische Konvertierung des wenigstens einen zu messenden Parameters eigentlich bewirkendes Innenteil.

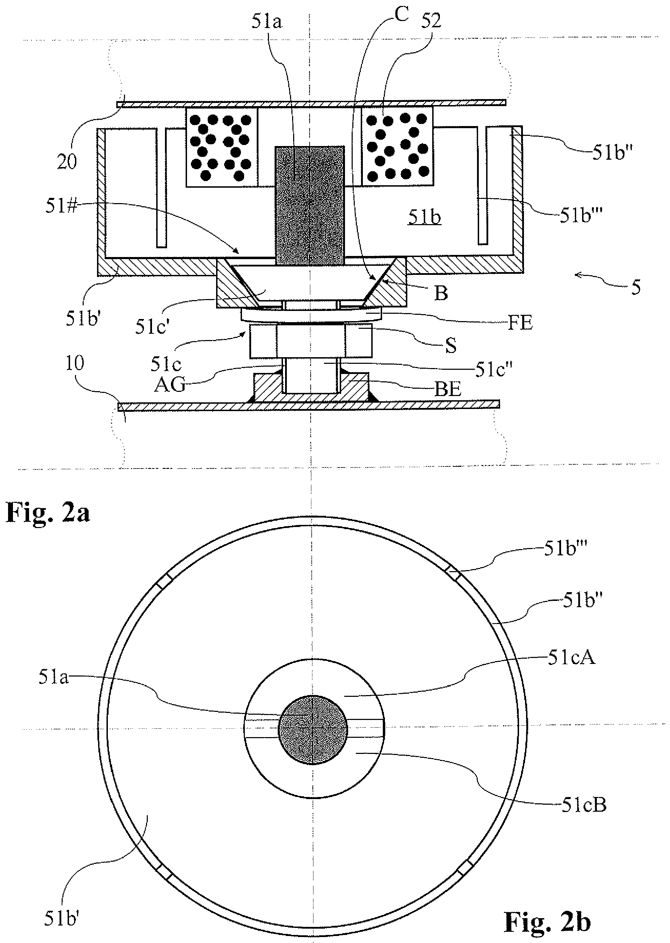

Zum Führen des Mediums umfaßt das Innenteil wenigstens ein - im in den Fig. 1b gezeigten Ausführungsbeispiel einziges im wesentlichen gerades - Meßrohr 10, das im Betrieb vibrieren gelassen und dabei, um eine statische Ruhelage oszillierend, wiederholt elastisch verformt wird. An dieser Stelle sei vorsorglich und ausdrücklich darauf hingewiesen, daß - obwohl der Meßaufnehmer im in Fig. 2 gezeigten Ausführungsbeispiel ein einziges gerades Meßrohr aufweist und zumindest insoweit in seinem mechanischen Aufbau wie auch seinem Wirkprinzip etwa dem in den eingangs erwähnten EP-A 317 340, US-B 72 99 699, US-B 70 73 396, US-B 70 40 179, US-B 70 17 424, US-B 68 40 109, US-B 66 91 583, US-B 66 51 513, US- B 63 97 685, US-B 63 30 832, US-A 60 47 457, US-A 59 79 246, US-A 59 45 609, US-A 57 96 012, US-A 57 96 010, US-A 56 91 485, US-A 55 31 126, US-A 54 76 013, US-A 53 98 554, US-A 52 91 792, US-A 48 23 614,- zur Realisierung der Erfindung selbstverständlich auch andere Meßaufnehmer vom Vibrationstyp, insb. auch mit mehr als einem Meßrohr und/oder mit gebogenen Meßrohren, dienen können. Beispielsweise kann das wenigstens eine Meßrohr und insoweit auch eine innerhalb von dessen Lumen verlaufende gedachte Schwerelinie des Meßrohrs dabei zumindest abschnittsweise im wesentlichen S-, Ω-, oder U-förmig oder, wie z.B. in der US-B 68 60 158, US-B 66 66 098, US-B 72 13 469 bzw. der US-B 73 60 451 gezeigt, zumindest abschnittsweise im wesentlichen V-förmig ausgebildet sein. Beispiele weitere, für die Realisierung der Erfindung geeignete Meßrohrformen sind darüberhinaus u.a. in den eingangs erwähnten US-A 52 87 754, US-A 56 02 345, US-A 57 96 011, US-B 63 111 36, US-B 67 58 102, US-A 57 31 527, US-A 53 01 557, oder der US-B 69 20 798 beschrieben.

Im Betrieb des Meßaufnehmers wird das Meßrohr 10, wie bei derartigen Meßaufnehmern üblich, zu Biegeschwingungen im sogenannten Nutzmode - beispielsweise bei einer im wesentlichen einer natürlichen Resonanzfrequenz entsprechenden Erregerfrequenz f_{exc} - so angeregt, daß es sich, um eine gedachte - hier zu einer gedachten Längsachse L des Meßaufnehmers, die dessen Einlaß- und Auslaßende imaginär verbindet, im wesentlichen parallele oder auch koinzidente - Biegeschwingungsachse oszillierend, zumindest anteilig im wesentlichen gemäß einer natürlichen ersten Eigenschwingungsform ausbiegt. Für den betriebsmäßig vorgesehenen Fall, daß das Medium in der Prozeßleitung strömt und somit der Massedurchfluß *m* von Null verschieden ist, werden mittels des in vorbeschriebener Weise vibrierenden Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben im wesentlichen gemäß einer natürlichen zweiten Eigenschwingungsform. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß *m* abhängig. Als zweite Eigenschwingungsform kann, wie bei deratigen Meßaufnehmern mit geradem Meßrohr üblich, z.B. die Eigenschwingungsform eines zum Nutzmode im wesentlichen komplanaren anti-symmetrischen Biegeschwingungsmodes sein.

Zur Minimierung von auf das Meßrohr 10 wirkenden Störeinflüssen wie auch zur Reduzierung von seitens des Meßaufnehmers an die angeschlossene Prozeßleitung abgegebener Schwingungsenergie ist im Meßaufnehmer des weiteren ein Gegenschwinger 20 vorgesehen. Dieser ist, wie auch in Fig. 1b gezeigt, vom Meßrohr 10 seitlich beabstandet im Meßaufnehmer angeordnet und unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der - im gezeigten Ausführungsbeispiel im wesentlichen parallel zum Meßrohr 10 verlaufende, ggf. auch koaxial zu diesem angeordnete - Gegenschwinger 20 kann beispielsweise rohrförmig oder auch im wesentlichen kastenförmig, auch ausgeführt sein. Im hier gezeigten Ausführungsbeispiel ist der Gegenschwinger 20 mittels wenigstens eines einlaßseitigen ersten Kopplers 31 am Einlaßende 11# des Meßrohrs 10 und mittels wenigstens eines auslaßseitigen, insb. zum Koppler 31 im wesentlichen identischen, zweiten Kopplers 32 am Auslaßende 12# des Meßrohrs 10 gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind, etwa durch Aufpressen und/oder Auflöten entsprechender Metallkörper gemäß der eingangs erwähnten US-A 60 47 457 oder US-B 61 68 069.

Wie in der Fig. 1b schematisch dargestellt, ist das Meßrohr 10 ferner über ein einlaßseitig im Bereich der ersten Kopplungszone 11# einmündendes gerades erstes Verbindungsrohrstück 11 und über ein auslaßseitig im Bereich der zweiten Kopplungszone 12# einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßaufnehmers und ein Auslaßende des auslaßseitigen Verbindungsrohrstück 12 das Auslaßende des Meßaufnehmers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßrohrs 10 kann im übrigen praktisch jedes der für solche Meßaufnehmer üblichen Materialien, wie z.B. Stahl, Hastelloy, Titan, Zirkonium, Tantal etc., verwendet werden.

Wie aus der Zusammenschau der Fig. 1a und 1b ohne weiteres ersichtlich, ist das, insb. im Vergleich zum Meßrohr 10 biege- und torsionssteifes, Wandlergehäuse 100, insb. starr, an einem bezüglich der ersten Kopplungszone #11 distalen Einlaßende des einlaßseitigen Verbindungsrohrstücks 11 sowie an einem bezüglich der ersten Kopplungszone #11 distalen Auslaßende des auslaßseitigen Verbindungsrohrstück 12 fixiert. Insoweit ist also das gesamte Innenteil nicht nur vom Wandlergehäuse 100 vollständig umhüllt, sondern infolge seiner Eigenmasse und der Federwirkung beider Verbindungsrohrstücke 11, 12 im Wandler-Gehäuse 100 auch schwingfähig gehaltert. Zusätzlich zur Aufnahme des Innenteils kann das Wandlergehäuse 100 zudem auch dazu dienen, das Elektronikgehäuse 200 des In-line-Meßgeräts mit darin untergebrachter Treiber- und Auswerte-Elektronik zu haltern. Für den Fall, daß der Meßaufnehmer lösbaren mit der, beispielsweise als metallische Rohrleitung ausgebildeten, Prozeßleitung zu montieren ist, ist ferner dem einlaßseitigen Verbindungsrohrstück 11 an seinem Einlaßende ein erster Anschlußflansch 13 des Meßaufnehmers und dem auslaßseitigen Verbindungsrohrstück 12 an einem Auslaßende ein zweiter Anschlußflansch 14 des Meßaufnehmers angeformt. Die Anschlußflansche 13, 14 können dabei, wie bei Meßaufnehmern der beschriebenen Art durchaus üblich auch zumindest teilweise endseitig in das Wandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden.

Zum Anregen mechanischer Schwingungen des Meßrohrs 10, insb. den Biegeschwingungen im Nutzmode, sowie des ggf. vorhandenen Gegenschwingers 20 umfaßt der Meßaufnehmer ferner wenigstens einen als Schwingungserreger 16 dienenden - hier mittig auf das Meßrohr einwirkenden - Schwingungswandler. Weitere geeignete Postionen für als Schwingungserreger dienende Schwingungswandler sind z.B. in den eingangs erwähnten US-B 65 57 422, US-A 60 92 429, US-A 48 23 614, US-B 62 23 605 oder US-A 55 31 126 gezeigt. Der Schwingungserreger dient dazu - angesteuert von einem von der Treiber-Elektronik gelieferten und, gegebenenfalls im Zusammenspiel mit der Auswerte-Elektronik, entsprechend konditionierten Erregersignal, z.B. mit einem geregelten Strom und/oder einer geregelten Spannung -, mittels der Treiber-Elektronik eingespeiste elektrische Erregerenergie *E_{exc}* in eine auf das Meßrohr 10, z.B. pulsförmig oder harmonisch, einwirkende und dieses in der vorbeschriebenen Weise auslenkende Erregerkraft *F_{exc}* umzuwandeln. Für das Einstellen der Erregerenergie *E_{exc}* geeignete Treiber-Elektroniken sind dem Fachmann hinlänglich bekannt und z.B. in der US-A 47 77 833, der US-A 48 01 897, der US-A 48 79 911 oder der US-A 50 09 109 gezeigt. Die Erregerkraft *F_{exc}* kann, wie bei derartigen Meßaufnehmern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden.

Gemäß einer weiteren Ausgestaltung der Erfindung ist das wenigstens eine Meßrohr im Betrieb mittels des Schwingungserregers16 zumindest zeitweise in einem Nutzmode angeregt, in dem es zumindest anteilig - insb. überwiegend oder ausschließlich - Biegeschwingungen um die Einlaß- und Auslaßende des Meßrohrs imaginär miteinander verbindende gedachte Schwingungsachse ausführt, beispielsweise mit einer einzigen und/oder einer niedrigsten seiner Resonanzfrequenzen. Die Biegeschwingungen des Meßrohrs weisen dabei im Bereich der das einlaßseitige Ende des Meßrohrs definierenden einlaßseitigen Kopplungszone 11# einen einlaßseitigen Schwingungsknoten und im Bereich der das auslaßseitige Ende des Meßrohrs definierenden auslaßseitigen Kopplungszone 11# einen auslaßseitigen Schwingungsknoten auf. Bei dem in Fig. 2 gezeigten Ausführungsbeispiel führt das Meßrohr 10 die Biegeschwingungen relativ zu Gegenschwinger 20 und Längsachse L aus.

Zum Erfassen von Schwingungen des Meßrohrs 10 weist der Meßaufnehmer ferner wenigstens einen weiteren, als erster Schwingungssensor 17 dienenden - hier einlaßseitig des Meßrohrs angeordneten -Schwingungswandler zum Erzeugen wenigstens eines Vibrationen des Meßrohrs 10 repräsentierenden ersten Primärsignals s₁ des Meßaufnehmers auf. Wie bei Meßsystemen der in Rede stehenden Art üblich, kann der Meßaufnehmer ferner wenigstens einen - beispielsweise auslaßseitig am Meßrohrs plazierten und/oder zum Schwingungssensor 17 im wesentlichen baugleichen - zusätzlichen zweiten Schwingungssensor 18 aufweisen, der wenigstens ein weiteres, beispielsweise auslaßseitige, Vibrationen des wenigstens einen Meßrohrs 10 repräsentierendes zweites Primärsignal s₂ des Meßaufnehmers liefert. Im hier gezeigten Ausführungsbeispiel sind der als erster Schwingungssensor 17 dienende Schwingungswandler einlaßseitig und der als zweiter Schwingungssensor 18 dienende Schwingungswandler auslaßseitig am wenigstens einen Meßrohr angeordnet, so daß der Meßaufnehmer beispielsweise auch in einem als Coriolis-MassendurchflußMeßgerät ausgebildeten Meßsystem verwendet werden kann. Die beiden als Schwingungssensoren 17, 18 dienenden, insb. einander im wesentlichen baugleich ausgebildeten, Schwingungswandler sind dabei in vorteilhafter Weise auf ein und derselben Seite am Meßrohr 10 und angeordnet und dabei so von jeder der beiden Kopplungszone 11#, 12# beabstandet im Meßaufnehmer plaziert, daß sie jeweils im wesentlichen den gleichen Abstand zur Mitte des Meßrohrs 10 bzw. zur jeweils nächsten der beiden Kopplungszone 11#, 12# aufweisen.

Die vorgenannten Schwingungswandler sind mit der erwähnten Treiber-Elektronik bzw. der erwähnten Auswerte-Elektronik des In-Line-Meßgeräts mittels entsprechende Anschlußleitungen elektrisch verbunden, die wiederum zumindest abschnittsweise innerhalb des Wandlergehäuses geführt sind, vgl. hierzu im besonderen auch die eingangs erwähnten US-A 2008/0250871, US-A 2008/0223150 bzw. US-A 2008/0223149. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls überlackierten Leiterplatte gebildet sein.

Beim erfindungsgemäßen Meßaufnehmer ist ferner vorgesehen, daß zumindest einer - ggf. auch jeder - der vorgenannten, als Schwingungssensor bzw. als Schwingungserreger dienenden, Schwingungswandler 16, 17, 18, mittels einer - beispielsweise am Meßrohr 10 befestigten - Magneteinrichtung 5 (->16, 17, bzw. 18) gebildet ist, die einen in einem Magnetbecher plazierten Permanentmagneten 51a aufweist.

Der zumindest anteilig aus ferro-magnetischem Material bestehende Permanentmagnet kann beispielsweise aus einer magnetischen Keramik, wie etwa Ferrit und/oder "Seltener Erde", insb. NdFeB (Neodym-Eisen-Bor) oder SmCo (Samarium-Cobalt) etc., hergestellt sein, während der Magnetbecher 51b zumindest anteilig aus einer magnetisch leitfähigen metallischen Legierung bestehen kann, beispielsweise also aus AINiCo (Aluminium-Nickel-Cobalt) oder einem Stahl, wie etwa einem Automatenstahl oder einem Baustahl, Ausgehend vom Becherboden 51b' erstreckt sich ferner eine, beispielsweise im wesentlichen kreiszylindrisch und/oder rohrförmig ausgebildete, Becherwand 51b" des Magnetbechers 51b. Der - hier länglich und/oder stabförmig ausgebildete - Permanentmagnet 51a wiederum ist - wie in den Fign. 2a und 2b schematisch dargestellt - innerhalb des Magnetbechers 51b an einem, beispielsweise unmittelbar am Meßrohr 10 befestigten, Becherboden 51b' des Magnetbechers 51b plaziert, beispielsweise im wesentlichen in einem Zentrum des Becherbodens 51b'. Für den bereits erwähnten Fall, daß die Becherwand 51b" des Magnetbechers 51b im wesentlichen kreiszylindrisch und/oder rohrförmig ausgebildet ist, ist gemäß einer anderen Weiterbildung der Erfindung ferner vorgesehen, Permanentmagnet 51a und Becherwand 51b" zueinander im wesentlichen koaxial verlaufend auszurichten. Ferner kann es von Vorteil sein, insb. zwecks Verminderung störender Einflüsse von externen Magnetfeldern auf die Magneteinrichtung und/oder zwecks Unterdrückung von störende Wirbelströmen innerhalb der Magneteinrichtung, in den Permanentmagneten und/oder, wie in Fig. 2a bzw. 2b schematisch dargestellt, in die Becherwand 51b" des Magnetbechers wenigstens einen Schlitz 511b'" einzuformen, vgl. hierzu auch die eingangs erwähnte DE-A 10 2007 062 397.

Der mittels vorgenannter Magneteinrichtung 5 gebildete Schwingungswandler weist ferner eine *vis a vis* des Permanentmagneten - hier entsprechend am Gegenschwinger 20 fixierte - Spule 52 auf; alternativ dazu können die Spule 52 aber auch am Gegenschwinger 20 und in entsprechender Weise der mit dieser korrespondierende Permanentmagnet 51a am Meßrohr 10 fixiert sein.

Die, beispielsweise als Zylinderspule realisierte, Spule 52 ist möglichst nah zum Permanentmagneten 51a angeordnet, und zwar so, daß sie dessen Magnetfeld ausgesetzt ist. Für den Fall, daß die Magneteinrichtung 51 als Schwingungssensor dient, wird infolge der Relativbewegung von Permanentmagnet 51a und Spule 52 in letzterer eine veränderliche Meßspannung induziert. Für den anderen Fall, daß die Magneteinrichtung 51 als Schwingungserreger dient, wird mittels des an die Spule 52 angelegten Erregersignals die die Vibrationen des Meßrohrs bewirkende Erregerkraft F_{exc} erzeugt. Spule und Permanentmagnet können z.B. in der Weise im Meßwandler plaziert und zueinander ausgerichtet sein, daß der Permanentmagnet nach Art eines Tauchankers in die Spule eintaucht und innerhalb derselben hin und her bewegt ist. Gemäß einer weiteren Ausgestaltung der Erfindung sind Permanentmagnet 51a und Spule 52 des wenigstes eine Schwingungssensors zueinander im wesentlichen koaxial verlaufend ausgerichtet.

Bei der erfindungsgemäßen Magneteinrichtung ist ferner eine dem Fixieren des - im hier gezeigten Ausführungsbeispiel eher länglich bzw. stabförmig ausgebildeten - Permanentmagneten im Magnetbecher dienende Halteeinrichtung 51c vorgesehen, die zumindest im eingebauten Zustand bzw. bei fertiggestellter Magneteinrichtung 5 mit dem Permanentmagneten 51a fest verbunden ist, etwa durch Kraft- und/oder Form- und/oder Stoffschluß. Die Halteeinrichtung 51c weist einen dem Permanentmagneten zugewandten und diesen kontaktierenden Haltekopf 51c' zum Haltern des Permanentmagneten sowie einen am Haltekopf fixierten Haltebolzen 51c" auf. Der Haltebolzen ist ferner mit seinem dem Haltekopf abgewandten Ende am Meßrohr 10 geeignet fixiert.

Zum Haltern der Magneteinrichtung am Meßrohr kann beispielsweise ein auf das Meßrohr 10 aufgeschobenes, das Meßrohr im wesentlichen entlang einer von dessen gedachten Umfangslinien fest, insb. vollumfänglich, umspannendes, insb. metallisches und/oder im wesentlichen scheibenförmiges, Befestigungselement BE dienen. Aufbau und Verwendung solcher Befestigungselemente für Magneteinrichtungen sind dem Fachmann bekannt, beispielsweise auch aus der eingangs erwähnten US-A 60 47 457, US-B 65 19 828 oder US-B 72 99 699. Als Material für das Befestigungselement 30 kann z.B. eine zum Haltebolzen bzw. dem zu dessen Fixierung dienenden Lot kompatible Metallegierung, etwa aus Titan oder ein Stahl, oder eine entsprechende Keramik dienen. Haltebolzen und Befestigungselement können beispielsweise stoffschlüssig, etwa mittels Lotverbindung, miteinander verbunden sein

Ebenso können auch der Haltekopf 51c' und der Haltebolzen 51c" mittels stoffschlüssiger Verbindung, wie etwa Löten oder Schweißen oder Kleben, aneinander fixiert sein; Haltekopf 51c' und Haltebolzen 51c" können aber z.B. auch als aus einem Stück gefertigtes, frei von Fügestellen gehaltenes monolithisches Bauteil ausgebildet sein. Gleichermaßen können Permanentmagnet 51a und Haltekopf 51c' mittels Formschluß und/der mittels, insb. durch Lotverbindung oder Klebverbindung hergestellten, Stoffschluß, aneinander fixiert sein. Alternativ dazu können der Permanentmagnet 51a und der Haltekopf 51c' aber auch einstückig ausgebildet sein, beispielsweise in Gestalt eines monolithischen Sinterformteils oder kann der Permanentmagnet mittels eines zwischen diesem und dem Haltekopf gebildeten, insb. wiederlösbaren, Kraftschlusses mit der Halteeinrichtung 51c fest verbunden sein.

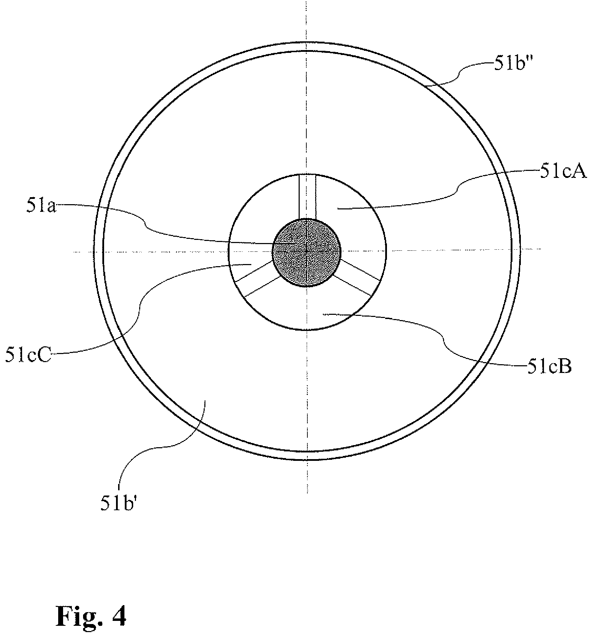

Wie in Fig. 2a, b oder auch Fig. 4a, b schematisch dargestellt, ist der, beispielsweise im wesentlichen kegelstumpfförmig oder auch kreiszylindrisch ausgebildete, Haltekopf 51c' der erfindungsgemäßen Magneteinrichtung 5 ferner zumindest teilweise von einer im Becherboden 51b vorgesehenen Durchführung 51# aufgenommen, und zwar so, daß eine äußere Kontaktfläche C des Haltekopfs 51c' und eine innere Kontaktfläche B der Durchführung 51# einander unter Bildung eines Kraftschlusses zwischen Magnetbecher 51b und Halteeinrichtung 51c berühren. Der Kraftschluß zwischen Magnetbecher 51b und Halteeinrichtung 51c kann beispielsweise durch thermisches Aufschrumpfen des Magnetbechers auf den zuvor in der Durchführung entsprechend positionierten Haltekopf und/oder durch gemischt plastisch-elastisches Verformen des Magnetbechers, etwa durch Verpressen desselben gegen den in die Durchführung eingebrachten Haltekopf, hergestellt sein, beispielsweise auch gemäß einem der in den eingangs erwähnten US-A 60 47 457, US-B 65 19 828 oder US-B 72 99 699 vorgestellten Verfahren zum Fixieren von Metallkörpern. Zur Erhöhung der Festigkeit des Formschlusses zwischen Magnetbecher und Halteeinrichtung können ferner, wie beispielsweise auch in der US-B 72 99 699 vorgeschlagen, zusätzlich auch Formschluß schaffende Konturen in die Kontaktflächen von Durchführung 51# und/oder Haltekopf eingeformt sein.

Gemäß einer anderen Ausgestaltung der Erfindung sind, wie in Fig. 2a schematisch dargestellt, der Haltekopf zumindest anteilig als Außenkonus und die im Becherboden vorgesehene Durchführung zumindest anteilig als Innenkonus ausgebildet, und zwar derart, daß die einander berührenden Kontaktflächen von Haltekopf bzw. Durchführung zueinander im wesentlichen komplementär sind. Zumindest bei dieser Ausgestaltung ist der Haltebolzen der Halteeinrichtung mit einem Außengewinde AG versehen. Ferner ist der Haltekopf bei dieser Ausgestaltung der Erfindung, wie in
Fig. 2a schematisch dargestellt, insb. auch in Zusammenschau mit Fig. 4 ohne weiteres erkennbar, mittels einer auf den Haltebolzen aufgeschraubten Spannmutter S gegen den Becherboden 51b' gedrückt gehalten, gegebenenfalls auch in einer die Durchführung 51# aufweitenden bzw. den Becherboden elastisch verformenden Weise. Zur Erhöhung der Vibrationsfestigkeit der Schraubverbindung kann hierbei ferner ein zwischen Spannmutter und Becherboden plaziertes, beispielsweise als Federring oder als Federscheibe ausgebildetes, Federelement FE dienen. Es versteht sich dabei praktisch von selbst, daß der mit dem Außengewinde AG versehene Abschnitt des Haltebolzens so bemessen ist, daß im Zusammenspiel von Spannmutter, Becherboden und Haltekopf eine ausreichend große Spannkraft erzeugt werden kann.

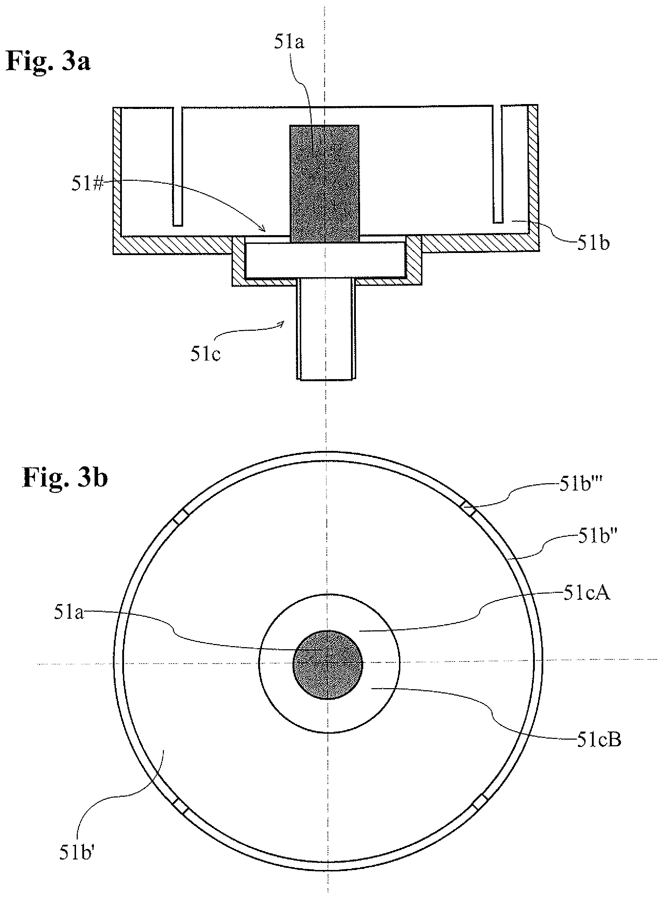

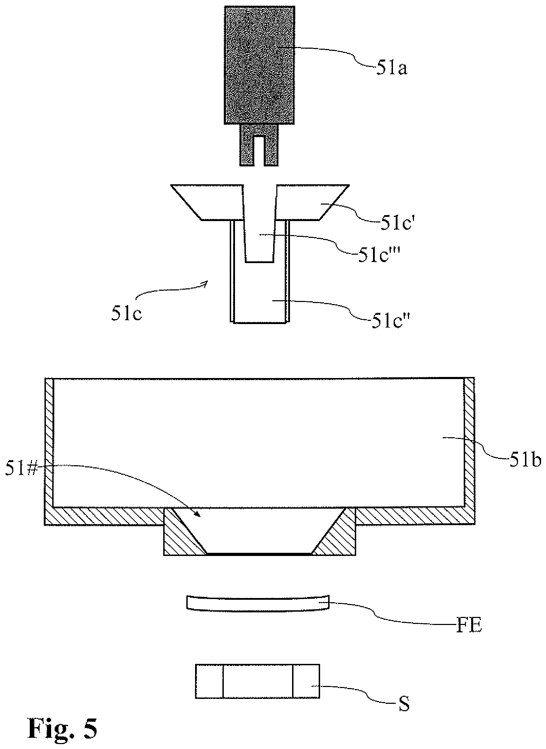

Gemäß einer weiteren Ausgestaltung der Erfindung ist die Halteeinrichtung als eine den Permanentmagneten greifende Spannzange ausgebildet. Dafür ist der Haltekopf, wie aus der Zusammenschau der Fig. 2a und 2b bzw. 5 ohne weiteres ersichtlich, mittels zweier oder auch mittels mehrerer, jeweils als Spannbacke ausgebildeter Kopfteile 51cA, 51cB bzw. 51cC realisiert. Der Permanentmagnet 51a ist dabei, wie aus der Zusammenschau der Fig. 2a, b und 5 bzw. der Fig. 3a, b und 5 ohne weiteres ersichtlich, mit einem von dessen Enden zwischen den wenigstens zwei Kopfteilen 51cA, 51cB plaziert, während die wenigstens zwei Kopfteile unter Bildung eines - hier im Zusammenspiel von Spannmutter und Durchführung sowie den Kopfteilen erzwungenen - Kraftschlusses zwischen Haltekopf 51c' und dem darin schlußendlich eingeklemmten Permanentmagnet 51a jeweils gegen den Permanentmagnet 51a gedrückt gehalten sind. Zumindest für diesen Fall, ist ferner vorgesehen, daß der Haltebolzen, wie auch in Fig. 5 schematisch dargestellt, in einem sich an den Haltekopf 51c' anschließenden, gegebenenfalls auch zumindest teilweise mit Außengewinde AG versehenen, Abschnitt wenigstens einen sich im wesentlichen in Richtung der Längsachse des Haltebolzens 51c" bis hin zu einem dem Permanentmagneten 51a zugewandten Rand des Haltekopfs 51c' erstreckenden Längsschlitz 51c'" aufweist. Der Längsschlitz 51c'" ist bei fertiggestellter Magneteinrichtung 5 unter Einwirkung der Spannmutter S sowie der gegen die Kopfteile wirkende Durchführung 51# geringfügig zusammengedrückt. Falls erforderlich, kann zudem auch der Permanentmagnet, wie auch in der Fig. 5 schematisch dargestellt, in seinem im Einbauzustand von den Kopfteilen gefaßten Endbereich einen gleichermaßen axial verlaufenden und im Einbauzustand etwas zusammengedrückten Längsschlitz aufweisen. Zur Realisierung eines möglichst starken Kraftschlusses zwischen Permanentmagnet 51a und den dagegen drückenden Kopfteile 51cA, 51cB wie auch zur Vereinfachung der Montage der Magneteinrichtung 5 ist ferner vorgesehen, daß die den Permanentmagneten 51a kontaktierenden Innenflächen der als Spannbacken dienenden Kopfteile eine zur kontaktierten Außenfläche des Permanentmagneten 51a im wesentlichen komplementäre Kontur aufweisen, so daß Permanentmagnet 51a und Haltekopf einander möglichst großflächig berühren und so die dazwischen wirkenden, letztlich den Kraftschluß herstellenden Reibkräfte erhöht werden. Zur weiteren Erhöhung der Auszugs- bzw. Vibrationsfestigkeit zwischen Permanentmagnet 51a und Halteeinrichtung 51c können in deren einander kontaktierenden Flächen ferner zusätzlich Formschluß gebende, beispielsweise als Gewindegänge oder Ringnuten ausgebildete, Konturen vorgesehen sein, etwa gemäß der US-B 72 99 699 vorgeschlagen Weise.

## Patentansprüche

1. Magneteinrichtung, insb. für einen Schwingungswandler und/oder für einen Meßaufnehmer vom Vibrationstyp, die umfaßt:
- einen ein Magnetfeld liefernden, insb. stabförmigen, Permanentmagneten (51a),
- eine mit dem Permanentmagneten, insb. durch Kraft- und/oder Form- und/oder Stoffschluß, fest verbundene, insb. als Spannzange ausgebildete, Halteeinrichtung (51c) mit
-- einem dem Permanentmagneten zugewandten, insb. zumindest anteilig als Außenkonus ausgebildeten, Haltekopf (51c') zum Haltern des Permanentmagneten, und
-- einem am Haltekopf fixierten, insb. ein Außengewinde aufweisenden und/oder in einem sich an den Haltekopf anschließenden Abschnitt längsgeschlitzten, Haltebolzen (51c"), sowie
- einen Magnetbecher (51b) mit
-- einem Becherboden (51b') und
-- einer sich vom Becherboden aus erstreckenden, insb. im wesentlichen kreiszylindrisch und/oder rohrförmig ausgebildeten, Becherwand (51b"),
- wobei der Haltekopf der Halteeinrichtung zumindest teilweise von einer im Becherboden vorhandenen, insb. zumindest anteilig als Innenkonus ausgebildeten, Durchführung (51#) aufgenommen ist, und
- wobei eine äußere Kontaktfläche des Haltekopfs (C) und eine innere Kontaktfläche der Durchführung (B) einander unter Bildung eines Kraftschlusses zwischen Magnetbecher und Halteeinrichtung berühren, insb. in einer die Durchführung aufweitenden und/oder den Becherboden elastisch verformenden Weise.

2. Magneteinrichtung nach dem vorherigen Anspruch,
- wobei der Haltebolzen der Halteeinrichtung ein Außengewinde (AG) aufweist, und
- wobei der Haltekopf der Halteeinrichtung mittels einer auf den Haltebolzen aufgeschraubten Spannmutter (S) gegen den Becherboden gedrückt gehalten ist.

3. Magneteinrichtung nach dem vorherigen Anspruch, wobei zwischen Spannmutter und Becherboden ein, insb. als Federring oder als Federscheibe ausgebildetes, Federelement (FE) plaziert ist.

4. Magneteinrichtung nach einem der vorherigen Ansprüche, wobei der Haltekopf (51c') mittels wenigstens zweier oder mehrerer, jeweils als Spannbacke ausgebildeten Kopfteilen (51cA, 51cB, 51cC) gebildet ist.

5. Magneteinrichtung nach dem vorherigen Anspruch,
- wobei der Permanentmagnet mit einem von dessen Enden zwischen den wenigstens zwei Kopfteilen plaziert ist, und
- wobei die wenigstens zwei Kopfteile unter Bildung eines, insb. im Zusammenspiel von Spannmutter und Durchführung sowie den wenigstens zwei Kopfteilen erzwungenen, Kraftschlusses zwischen Permanentmagnet und Haltekopf jeweils gegen den Permanentmagnet gedrückt gehalten sind.

6. Magneteinrichtung nach einem der vorherigen Ansprüche, wobei der Kraftschluß zwischen Magnetbecher und Halteeinrichtung durch thermisches Aufschrumpfen des Magnetbechers auf die Halteeinrichtung, insb. den Haltekopf, hergestellt ist.

7. Magneteinrichtung nach einem der vorherigen Ansprüche, wobei Permanentmagnet und Haltekopf mittels, insb. durch wiederlösbaren, Kraftschluß und/oder mittels Formschluß und/der mittels, insb. durch Lotverbindung oder Klebverbindung hergestellten, Stoffschluß, aneinander fixiert sind.

8. Magneteinrichtung nach einem der vorherigen Ansprüche, wobei die Becherwand (51b") des Magnetbechers wenigstens einen, insb. sich bis zu einem zum Becherboden distalen Rand der Becherwand erstreckenden, Schlitz (511b'") aufweist.

9. Magneteinrichtung gemäß einem der vorherigen Ansprüche,
- wobei der Permanentmagnet zumindest anteilig, insb. überwiegend oder vollständig, aus einer Seltenenerde, insb. NdFeB, SmCo oder dergleichen, besteht; und/oder
- wobei der Permanentmagnet zumindest anteilig, insb. überwiegend oder vollständig, aus Ferrit oder AlNiCo besteht.

10. Magneteinrichtung gemäß einem der vorherigen Ansprüche,
- wobei der Magnetbecher zumindest anteilig, insb. überwiegend oder vollständig, aus einem Stahl, insb. einem Automatenstahl oder einem Baustahl, besteht; und/oder
- wobei der Magnetbecher zumindest anteilig, insb. überwiegend oder vollständig, aus Ferrit besteht.

11. Meßaufnehmer vom Vibrationstyp für ein in einer Rohrleitung strömendes Medium, welcher Meßaufnehmer umfaßt:
- wenigstens ein zumindest zeitweise vibrierendes Meßrohr (10) zum Führen von zu messendem Medium, sowie
- wenigstens einen, insb. als elektrodynamischer Schwingungserreger oder als elektrodynamischer Schwingungssensor dienenden, am wenigstens einen Meßrohr gehalterten Schwingungswandler für Vibrationen des wenigstens einen Meßrohrs, wobei der wenigstens eine Schwingungswandler eine Magneteinrichtung gemäß einem der Ansprüche 1 bis 10 aufweist.

12. Meßaufnehmer nach dem vorherigen Anspruch, wobei die Magneteinrichtung via Haltebolzen mit dem wenigstens einen Meßrohr mechanisch gekoppelt ist.

13. Meßaufnehmer gemäß einem der Ansprüche 11 bis 12, wobei der wenigstens eine Schwingungswandler weiters eine dem Magnetfeld des Permanentmagneten ausgesetzte Zylinderspule aufweist.

14. Verwendung eines Meßaufnehmers gemäß einem der Ansprüche 11 bis 13 in einem In-Line-Meßgerät zum Messen und/oder Überwachen wenigstens eines Parameters, insb. eines Massendurchflusse, *m*, einer Dichte, *ρ*, und/oder einer Viskosität, *η*, eines in einer Rohrleitung strömenden Mediums, insb. einem Coriolis-Massendurchflußmeßgerät, einem Dichtemeßgerät, einem Viskositätsmeßgerät oder dergleichen, insb. bei einer Betriebstemperatur von zumindest zeitweise mehr als 200°C und/oder von zumindest zeitweise weniger als -50°C.

## Claims

1. Magnetic assembly, particularly for a vibration transducer and/or a vibronic-type sensor, said assembly comprising:
- a permanent magnet (51a), particularly rod-shaped, generating a magnetic field,
- a retaining unit (51c) connected to the permanent magnet in a fixed manner, particularly by means of a force-type connection and/or a positive locking connection and/or a material bond, said retaining unit (51c) particularly being designed as a collet, with
-- a retaining head (51c') designed to hold the permanent magnet, said retaining head facing towards the permanent magnet and particularly being designed, at least in part, as an exterior cone, and
-- a retaining bolt (51c") fixed on the retaining head, said bolt particularly having an outer thread and/or being slotted longitudinally in a section that continues on from the retaining head, as well as
- a magnetic cup (51b) with
-- a cup base (51b') and
-- a cup wall (51b") that extends from the cup base and has an essentially circular cylindrical and/or tubular design,
- wherein the retaining head of the retaining assembly is held at least partially by a feedthrough (51#) that is provided in the cup base, being designed at least in part as an interior cone, and
- wherein an outer contact surface of the retaining head (C) and an inner contact surface of the feedthrough (B) touch one another forming a force-type connection between the magnetic cup and the retaining assembly, particularly in a manner that expands the feedthrough and/or elastically deforms the cup base.

2. Magnetic assembly as claimed in the previous claim,
- wherein the retaining bolt of the retaining assembly has an outer thread (AG), and
- wherein the retaining head of the retaining assembly is kept pressed against the cup base by a clamping nut (S) screwed onto the retaining bolt.

3. Magnetic assembly as claimed in the previous claim, wherein a spring element (FE) is positioned between the clamping nut and the cup base, particularly a spring element designed as a spring ring or spring washer.

4. Magnetic assembly as claimed in one of the previous claims, wherein the retaining head (51c') is formed by at least two or more head parts (51cA, 51cB, 51cC) which are each designed as a clamping jaw.

5. Magnetic assembly as claimed in the previous claim,
- wherein the permanent magnet is positioned with one of its ends between the at least two head parts, and
- wherein the at least two head parts are each kept pressed against the permanent magnet by the formation of a force-type connection between the permanent magnet and the retaining head, particularly created by the interaction between the clamping nut and feedthrough as well as the at least two head parts.

6. Magnetic assembly as claimed in one of the previous claims, wherein the force-type connection between the magnetic cup and the retaining assembly is established by thermally shrinking the magnetic cup onto the retaining assembly, particularly the retaining head.

7. Magnetic assembly as claimed in one of the previous claims, wherein the permanent magnet and the retaining head are fixed onto one another by means of a, particularly releasable, force-type connection, and/or a positive locking connection and/or a material bond particularly formed by means of a solder connection or adhesive connection.

8. Magnetic assembly as claimed in one of the previous claims, wherein the cup wall (51b') of the magnetic cup has at least one slot (511b'"), said slot particularly extending to a distal edge of the cup wall, in relation to the cup base.

9. Magnetic assembly as claimed in one of the previous claims,
- wherein the permanent magnet is made at least partially, particularly primarily or completely, from a rare earth, particularly NdFeB, SmCo, or similar; and/or
- wherein the permanent magnet is made at least partially, particularly primarily or completely, from ferrite or AlNiCo.

10. Magnetic assembly as claimed in one of the previous claims,
- wherein the magnetic cup is made at least partially, particularly primarily or completely, from a steel, particularly a machining steel or a structural steel; and/or
- wherein the magnetic cup is made at least partially, particularly primarily or completely, from ferrite.

11. Vibronic-type sensor for a medium flowing through a pipe, said sensor comprising:
- at least one measuring tube (10), which vibrates at least temporarily, designed to conduct medium to be measured, as well as
- at least one vibration transducer, which is fixed on at least one measuring tube, for vibrations of the at least one measuring tube, said vibration transducer particularly serving as an electrodynamic vibration exciter or as an electrodynamic vibration sensor, wherein the at least one vibration transducer has a magnetic assembly as claimed in one of the Claims 1 to 10.

12. Sensor as claimed in the previous claim, wherein the magnetic assembly is mechanically coupled to the at least one measuring tube via retaining bolts.

13. Sensor as claimed in one of the previous Claims 11 to 12, wherein the at least one vibration transducer further comprises a cylindrical coil that is exposed to the magnetic field of the permanent magnet.

14. Use of a sensor as claimed in one of the Claims 11 to 13 in an inline measuring device to measure and/or monitor at least one parameter, particularly a mass flow, *m*, a density, *ρ*, and/or a viscosity, *η*, of a medium flowing through a pipe, particularly a Coriolis mass flowmeter, a density meter, a viscosity meter or similar, particularly at an operating temperature which is at least temporarily greater than 200 °C and/or at least temporarily less than -50 °C.

## Revendications

1. Dispositif magnétique, notamment pour un convertisseur de vibrations et/ou un capteur du type à vibrations, lequel dispositif comprend :
- un aimant permanent (51a), notamment en forme de tige, générant un champ magnétique,
- un dispositif de retenue (51c) relié de façon fixe avec l'aimant permanent, notamment par liaison de force et/ou de forme et/ou de matière, lequel dispositif est conçu sous la forme d'une pince de serrage, avec
-- une tête de retenue (51c') destinée au maintien de l'aimant permanent, faisant face à l'aimant permanent, notamment conçue au moins partiellement en tant que cône extérieur, et
-- un boulon de retenue (51c") à fente longitudinale, fixé sur la tête de retenue, présentant notamment un filetage extérieur et/ou une partie attenante à la tête de retenue, ainsi que
- un bol magnétique (51b) avec
-- un fond de bol (51b') et
-- une paroi de bol (51b") s'étendant à partir du fond de bol, conçue notamment pour l'essentiel selon une forme cylindrique circulaire et/ou tubulaire,
- la tête de retenue du dispositif de retenue étant au moins partiellement logée dans une traversée (51#), présente dans le fond du bol, notamment conçue au moins partiellement sous la forme d'un cône intérieur, et
- une surface de contact extérieure de la tête de retenue (C) et une surface de contact intérieure de la traversée (B) se touchant mutuellement en formant une liaison de force entre le bol magnétique et le dispositif de retenue, notamment de manière à évaser la traversée et/ou par déformation élastique du fond de bol.

2. Dispositif magnétique selon la revendication précédente,
- pour lequel le boulon de retenue du dispositif de retenue présente un filetage extérieur (AG), et
- pour lequel la tête de retenue du dispositif de retenue est maintenue en appui contre le fond du bol au moyen d'un écrou de serrage (S) vissé sur le boulon de retenue.

3. Dispositif magnétique selon la revendication précédente, pour lequel est placé, entre l'écrou de serrage et le fond du bol, un élément élastique (FE), notamment conçu en tant qu'anneau élastique ou en tant que disque élastique.

4. Dispositif magnétique selon l'une des revendications précédentes, pour lequel la tête de retenue (51c') est formée au moyen d'au moins deux parties de tête (51cA, 51cB, 51cC) formées respectivement en tant que mâchoires de serrage.

5. Dispositif magnétique selon la revendication précédente,
- pour lequel l'aimant permanent est placé avec l'une de ses extrémités entre les au moins deux parties de tête, et
- pour lequel les au moins deux parties de tête sont maintenues en appui contre l'aimant magnétique en formant une liaison de force entre l'aimant permanent et la tête de retenue, notamment obtenue par l'interaction entre un écrou de serrage et une traversée, ainsi que les au moins deux parties de tête.

6. Dispositif magnétique selon l'une des revendications précédentes, pour lequel la liaison de force entre le bol magnétique et le dispositif de retenue est réalisée par un frettage thermique du bol magnétique sur le dispositif de retenue, notamment la tête de retenue.

7. Dispositif magnétique selon l'une des revendications précédentes, pour lequel l'aimant permanent et la tête de retenue sont fixés l'un à l'autre au moyen d'une liaison de force, notamment amovible, et/ou au moyen d'une liaison de forme et/ou au moyen d'une liaison de matière, obtenue notamment par soudage ou par collage.

8. Dispositif magnétique selon l'une des revendications précédentes, pour lequel la paroi de bol (51b') du bol magnétique comporte au moins une fente (511b'"), laquelle fente s'étend notamment jusqu'à un bord distal de la paroi de bol, par rapport au fond de bol.

9. Dispositif magnétique selon l'une des revendications précédentes,
- pour lequel l'aimant permanent est constitué au moins partiellement, notamment essentiellement ou intégralement, d'une terre rare, notamment du NdFeB, du SmCo, ou une terre rare analogue ; et/ou
- pour lequel l'aimant permanent est constitué au moins partiellement, notamment essentiellement ou intégralement, d'une ferrite ou d'AINiCo.

10. Dispositif magnétique selon l'une des revendications précédentes,
- pour lequel le bol magnétique est constitué au moins partiellement, notamment essentiellement ou intégralement, d'un acier, notamment un acier de décolletage ou un acier de construction ; et/ou
- pour lequel le bol magnétique est constitué au moins partiellement, notamment essentiellement ou intégralement, d'une ferrite.

11. Capteur du type à vibrations pour un produit s'écoulant dans une conduite, lequel capteur comprend :
- au minimum un tube de mesure (10) vibrant au moins temporairement, destiné à guider le produit à mesurer, ainsi que
- au minimum un convertisseur de vibrations, servant notamment d'excitateur électrodynamique de vibrations ou de capteur électrodynamique de vibrations, lequel convertisseur est fixé sur au moins un tube de mesure et convertit les vibrations de l'au moins un tube de mesure, l'au moins un convertisseur de vibrations comportant un dispositif magnétique selon l'une des revendications 1 à 10.

12. Capteur selon la revendication précédente, pour lequel le dispositif magnétique est couplé mécaniquement via un boulon de retenue avec l'au moins un tube de mesure.

13. Capteur selon l'une des revendications 11 à 12, pour lequel l'au moins un convertisseur de vibrations comprend en outre une bobine cylindrique exposée au champ magnétique de l'aimant permanent.

14. Utilisation d'un capteur selon l'une des revendications 11 à 13 dans un appareil de mesure en ligne destiné à la mesure et/ou la surveillance d'au moins un paramètre, notamment un débit massique, *m*, une densité, *ρ*, et/ou une viscosité, *η*, d'un produit s'écoulant dans une conduite, notamment un débitmètre massique Coriolis, un densimètre, un viscosimètre, etc., notamment à une température de service au moins temporairement supérieure à 200 °C et/ou au moins temporairement inférieure à -50 °C.
